Europäisches Patentamt

European Patent Office

Office européen des brevets

(19)

(11) Publication number: **0 047 771**
**B1**

(12) # EUROPEAN PATENT SPECIFICATION

(45) Date of publication of patent specification: **18.07.84**

(21) Application number: **81900740.2**

(22) Date of filing: **17.03.81**

(86) International application number:
**PCT/SE81/00088**

(87) International publication number:
**WO 81/02690 01.10.81 Gazette 81/23**

(51) Int. Cl.³: **B 03 C 1/02, B 08 B 15/00,**
**F 16 D 13/58, F 16 D 65/00**

(54) **AN IMPROVEMENT IN BRAKES OR CLUTCHES.**

(30) Priority: **18.03.80 SE 8002099**

(43) Date of publication of application:
**24.03.82 Bulletin 82/12**

(45) Publication of the grant of the patent:
**18.07.84 Bulletin 84/29**

(84) Designated Contracting States:
**DE FR GB**

(56) References cited:
**US - A - 2 549 529**

(73) Proprietor: **PARTCOLL HANDELSBOLAG**
**Vikensvägen 5H**
**S-236 00 Höllviksnäs (SE)**

(72) Inventor: **LARSSON, Karl Bertil**
**Vikensvägen 5 H**
**S-236 00 Höllviksnäs (SE)**
Inventor: **LARSSON, Hans Erik Bernhardh**
**Vikensvägen 5 H**
**S-236 00 Höllviksnäs (SE)**

(74) Representative: **Petri, Stellan**
**c/o SAB Thulinverken AB Box 531**
**S-261 24 Landskrona (SE)**

Courier Press, Leamington Spa, England.

# Description

Technical field

This invention relates to a device, such as a friction-type brake or clutch, comprising relatively rotative elements and friction material to be applied between said elements, said friction material containing a fiber structure such as asbestos fibers and particulate magnetic metal or magnetic metal oxide material bound together with the fiber structure by a binder.

Background art

It is very well known that asbestos provides environmental danger and therefore should not be used in the working life. Accordingly, efforts have been made to replace asbestos with other materials providing less danger as to the health of people working therewith. In industrialized countries the use of asbestos to a great extent is prohibited by law or regulations and rigorous measures must be taken when asbestos or materials containing asbestos are being handled or worked.

One field wherein it has not been possible so far to replace asbestos material by another less risky material is the automobile industry where friction linings for brakes and clutches normally contain asbestos fibers. Usually, the material of such linings comprises asbestos fibers as friction and reinforcing material, and friction-modifying materials such as metal powders, metal oxides, organic friction dust and carbon, especially graphite, the fibers and the friction-modifying materials being held together by a binder system comprising a thermosetting plastics material such as phenolic resins and synthetic rubber. The content of asbestos fibers in friction linings may comprise as much as 60 to 70 per cent by weight.

In order to protect people handling new linings for brakes and clutches in equipment shops and automobile repair workshops against the injuries associated with asbestos products it is common to have a coating on such linings, which prevents detachment of the asbestos fibers therefrom. However, when repairs have to be made on brakes and clutches wherein dust containing asbestos fibers has been collected, people performing such repairs are facing a considerable danger of inhaling air containing such fibers, particularly when repairs are made on trucks, buses and other large vehicles. It is therefore necessary to use breathing protection when such repairs are made or to bind the dust and the fibers entrained therein by means of water.

The asbestos fibers detached from the friction lining in a brake or clutch due to abrasion of such lining when the brake is engaged or slipping occurs in the clutch, are not all of them collected in the brake or clutch. Although it has been maintained by manufacturers of brake and clutch linings that the asbestos fibers are converted by the heat developed in the brake or clutch into a modified form which is not injurious to health when inhaled, investigations made have shown that the air around big traffic routes in towns has a high content of asbestos fibers emanating from the vehicles passing on the traffic route.

Disclosure of invention

The purpose of the invention is to eliminate the environmental danger to the health associated with the use of friction linings containing asbestos.

For this purpose, a device of the kind initially referred to is characterized, according to the invention, in that magnetic means are provided adjacent the friction material to catch fibers detached therefrom, by magnetic attraction of magnetic metal or metal oxide particles adhered or nested to the detached fibers or clusters thereof.

The invention is based on the observation that particles of the metal or metal oxide material included into the friction material adhere or nest to the asbestos fibers. Particularly, it has been found that the fibers are not usually detached from the friction material as individual fibers; they are in most cases clogged or twisted together to form clusters of fibers wherein the metal or metal oxide particles are nested or caught between the individual fibers of the fiber cluster.

Preferably, means are provided to direct an air flow adjacent the friction material and then along the magnetic means.

It is also preferred that the magnetic means comprises electromagnets which are energized in order to attract and catch the detached fibers scattered from the friction material, the electromagnets being deenergized to release the caught material for collection in a collector arranged below the magnetic means.

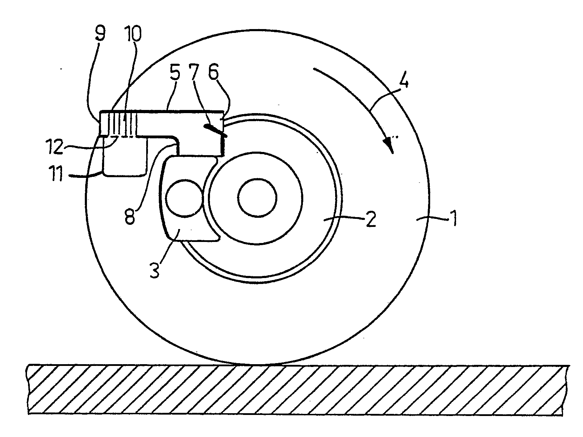

Brief description of the drawing

The invention will be described in more detail below with reference to the accompanying drawing in which the only figure therein is a diagrammatic side view of a vehicle wheel with a brake arranged according to the invention.

Description of the preferred embodiment

In the drawing, there is shown a vehicle wheel 1 having a brake disc 2 and a pair of hydraulically operated shoes 3 comprising a friction material and supported by back plates in the manner which is customary in connection with disc-type automotive wheel brakes. The rotational direction of the wheel 1 is indicated by an arrow 4.

Above the shoes 3 there is provided according to the invention an air tunnel 5 having an inlet opening 6 catching the ram air when the vehicle is moving with the wheel rotating according to arrow 4. A butterfly valve 7 is provided at opening 6 for closing off said opening and this valve may be automatically operated so as to keep opening 6 normally closed and to uncover said opening when the brake is engaged. A downwardly extending stud 8 is provided on the tunnel 5 above each shoe 3 to collect fiber and other material detached from the shoes when the brake is engaged. In the tunnel 5 there is provided at the other, open end 9 thereof, opposite to opening 6, a system of grids 10, a collector box 11 being detachably mounted to the tunnel 5 below the grids and communicating with the interior of the tunnel through an opening 12. The grids can form part of an electromagnet or each grid may be provided with one or more coils for magnetizing by D.C. or A.C. current.

When the brake is engaged on the moving vehicle the butterfly valve 7 being opened, air is forced into the tunnel 5 through the opening 6 and carries along fibers and particulate material emanating from the friction material of the shoes 3 and scattered into the tunnel or sucked thereinto through the stud 8 by injector action provided by the air flow through the tunnel 5. The material thus entrained in the air is transported by the air flow to the system of grids 10. The grids being magnetized will catch the material entrained in the air, by magnetic attraction and as explained above, this will be true not only for magnetic metal or metal oxide material but also for the non-magnetic fiber material (asbestos fibers) because the magnetic material adheres or nests to the fibers or fiber clusters detached and scattered from the friction material. Thus, cleaned air without dangerous constituents entrained therein will be discharged from the tunnel 5 at the open end 9.

The energization of the electromagnet or coils may be controlled over the brakes of the vehicle so that the electromagnet or coils are de-energized when the brake is disengaged, e.g. by connecting the electromagnet or coils to the brake light circuit to which may also be connected an electromagnet operating the valve 7 so that the valve is opened when the brake is engaged and is closed when the brake is disengaged. Then, a major part of the material adhered to the grids 10 will fall down into the collector box 11 through opening 12. This box can be emptied from time to time under safe conditions or may be provided with closure means closing off the collector box when removed from the tunnel 5, the collector box then preferably being of the disposable type.

- Alternatively, the valve 7 and the electromagnet or coils may be controlled from the speedometer or the hand brake, so that the valve 7 is closed and the electro-magnet or coils are de-energized when the speed indicated by the speedometer is zero or close to zero and the hand brake is engaged, respectively. If it is desired not to rely upon particulate magnetic material adhering or being nested to the fibers so that the fibers can be attracted to the magnetic grids, the fibers can be specifically treated so as to secure under all circumstances that they can be attracted to the magnetic grids. This can be obtained by providing a thin layer or coating of magnetic material such as iron on the individual fibers forming a constituent of the friction material. Such a layer or coating can be applied to the surface of the fibers to be included in the friction material, by a vacuum deposition process according to a technology that is well known.

The invention can also be applied if other fibers than asbestos fibers are used in the friction material if it is considered that such fibers should not be scattered to the environment when the brake or clutch is engaged. Particularly, if such other fibers are of a kind which does not form clusters retaining particles of magnetic material between the individual fibers, it is advantageous to apply to the fibers a layer or coating of magnetic material as mentioned above.

In case of electrically driven vehicles running on rails, collecting of the particles detached from the friction material of the brakes may be advantageous also from the point of view that such material otherwise may be deposited on electrical equipment on the vehicle and along the track for the vehicle and if it is electrically conducting may cause flash-overs in such equipment. This is a secondary advantage obtained by the invention.

## Claims

1. A device, such as a friction-type brake or clutch, comprising relatively rotative elements (2, 3) and friction material to be applied between said elements, said friction material containing a fiber structure such as asbestos fibers and particulate magnetic metal or magnetic metal oxide material bound together with the fiber structure by a binder, characterized in that magnetic means (10) are provided adjacent the friction material to catch fibers detached therefrom, by magnetic attraction of magnetic metal or metal oxide particles adhered or nested to the detached fibers or clusters thereof.

2. A device according to claim 1, characterized in that means (5, 8) are provided to direct an air flow adjacent the friction material (3) and then along the magnetic means (10).

3. A device according to claim 1 or 2, characterized in that the magnetic means (10) comprise electromagnetic means.

4. A device according to claim 3, characterized in that a collector (11) for material attracted by the magnetic means (10) is arranged below such means.

## Revendications

1. Dispositif, tel qu'un frein ou embrayage du type à friction, comprenant des éléments (2, 3) tournant l'un par rapport à l'autre et une matière de frottement destinée à être appliquée entre lesdits éléments, ladite matière de frottement contenant une structure fibreuse telle que des fibres d'amiante et des particules de métal magnétique ou d'oxyde de métal magnétique liées entre elles avec la structure fibreuse par un liant, caractérisé en ce que des moyens magnétiques (10) sont prévus à proximité immédiate de la matière de frottement pour retenir les fibres qui en sont détachées, par attraction magnétique des particules de métal magnétique ou d'oxyde de métal collées aux fibres ou groupes de fibres détachés ou imbriquées dans ceux-ci.

2. Dispositif selon la revendication 1, caractérisé en ce que des moyens (5, 8) sont prévus pour diriger un écoulement d'air à proximité immédiate de la matière (3) de frottement puis le long des moyens magnétiques (10).

3. Dispositif selon la revendication 1 ou 2, caractérisé en ce que les moyens magnétiques (10) comprennent des moyens électromagnétiques.

4. Dispositif selon la revendication 3, caractérisé en ce qu'un collecteur (11) destiné à la matière attirée par les moyens magnétiques (10) est disposé au-dessous de ces moyens.

## Patentansprüche

1. Vorrichtung, wie Reibungsbremse oder Reibungskupplung, mit relativ zueinander drehenden Elementen (2, 3) und einem zwischen diese Elemente einbringbaren Reibmaterial, das einen Faseraufbau, wie Asbestfasern, teilchenförmiges magnetisches Metall oder magnetisches Metalloxidmaterial enthält, das an dem Faseraufbau durch ein Bindemittel gebunden ist, dadurch gekennzeichnet, daß eine magnetische Einrichtung (10) angrenzend an das Reibmaterial vorgesehen ist, um Fasern, die sich von diesem gelöst haben, durch magnetische Anziehung der Partikel aus magnetischem Metall oder Metalloxid einzufangen, die an den freien Fasern oder Faserklumpen haften oder in diesen eingelagert sind.

2. Vorrichtung nach Anspruch 1, dadurch gekennzeichnet, daß eine Einrichtung (5, 8) vorgesehen ist, um einen Luftstrom an dem Reibmaterial (3) vorbei und dann längs der magnetischen Einrichtung (10) zu leiten.

3. Vorrichtung nach Anspruch 1 oder 2, dadurch gekennzeichnet, daß die magnetische Einrichtung (10) eine elektromagnetische Einrichtung umfaßt.

4. Vorrichtung nach Anspruch 3, dadurch gekennzeichnet, daß ein Kollektor (11) für das durch die magnetische Einrichtung (10) angezogene Material unter dieser Einrichtung angeordnet ist.